(19) Europäisches Patentamt
European Patent Office
Office européen des brevets

(11) **EP 2 479 599 B1**

(12) # FASCICULE DE BREVET EUROPEEN

(45) Date de publication et mention de la délivrance du brevet:
**03.05.2017 Bulletin 2017/18**

(51) Int Cl.:
***G02C 7/06*** *(2006.01)* ***G02C 7/02*** *(2006.01)*

(21) Numéro de dépôt: **12164908.1**

(22) Date de dépôt: **27.07.2004**

(54) **Procede de determination d'une lentille ophtalmique utilisant une prescription d'astigmatisme different en vision de loin et en vision de près**

Verfahren zur Bestimmung einer Sehlinse unter Verwendung einer unterschiedlichen Verschreibung für den Astigmatismus für Fern- und Nahsicht

Method for determining an ophthalmic lens using different astigmatism prescription for far and near distance vision

(84) Etats contractants désignés:
**AT BE BG CH CY CZ DE DK EE ES FI FR GB GR HU IE IT LI LU MC NL PL PT RO SE SI SK TR**

(30) Priorité: **08.08.2003 FR 0309787**

(43) Date de publication de la demande:
**25.07.2012 Bulletin 2012/30**

(62) Numéro(s) de document de la (des) demande(s) initiale(s) en application de l'article 76 CBE:
**04767790.1 / 1 660 928**

(73) Titulaire: **ESSILOR INTERNATIONAL (Compagnie Générale d'Optique)**
**94220 Charenton-le-Pont (FR)**

(72) Inventeurs:
- **Donetti, Bérangère**
  **94500 Champigny Sur Marne (FR)**
- **Petignaud, Cécile**
  **94800 Villejuif (FR)**
- **Hernandez, Martha**
  **94220 Charenton le Pont (FR)**

(74) Mandataire: **Cabinet Plasseraud**
**66 rue de la Chaussée d'Antin**
**75440 Paris Cedex 09 (FR)**

(56) Documents cités:
**EP-A- 0 461 624** **EP-A- 0 949 529**
**EP-A- 0 990 939**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 479 599 B1

## Description

La présente invention a pour objet un procédé de détermination d'une lentille ophtalmique.

La prescription en matière ophtalmique peut comprendre une prescription d'astigmatisme. Une telle prescription est effectuée par l'ophtalmologiste sous la forme d'un couple formé d'une valeur d'axe (en degrés) et d'une valeur d'amplitude (en dioptries). Sur une surface, la valeur d'amplitude représente la différence 1/R1 - 1/R2 entre les courbures principales; la valeur d'axe représente l'orientation, par rapport à un axe de référence et dans un sens de rotation convenu, de la courbure maximale 1/R1. En pratique, l'axe de référence est horizontal et le sens de rotation est le sens trigonométrique direct, lorsque l'on regarde le porteur. Une valeur d'axe de +45° représente donc un axe orienté obliquement, qui lorsque l'on regarde le porteur, s'étend du quadrant situé en haut à gauche jusqu'au quadrant situé en bas à droite. En termes de prescription, la valeur d'amplitude représente la différence entre les puissances minimales et maximales dans une direction donnée et l'axe représente l'orientation de la puissance maximale. Une telle prescription d'astigmatisme est mesurée en vision de loin du porteur. On utilise le terme astigmatisme pour désigner le couple (amplitude, angle); bien qu'il s'agisse d'un abus de langage, on utilise aussi parfois ce terme pour désigner l'amplitude de l'astigmatisme. Le contexte permet à l'homme du métier de comprendre quelle acception est entendue.

Indépendamment de cette prescription d'astigmatisme, il peut être prescrit à un porteur une correction en puissance, positive ou négative. Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition représentative de l'incrément de puissance entre la vision de loin et la vision de près. Les lentilles adaptées aux porteurs presbytes sont des lentilles multifocales progressives; ces lentilles sont décrites par exemples dans FR-A-2 699 294, US-A-5 270 745 ou US-A-5 272 495, FR-A-2 683 642, FR-A-2 699 294 ou encore FR-A-2 704 327. Pour les jeunes presbytes, il a été proposé des lentilles qui ne présentent pas une zone de vision de loin avec un point de référence, à l'inverse des lentilles multifocales progressives classiques; ces lentilles sont décrites dans FR-A-2 588 973.

Par ailleurs, les lois de l'optique des tracés de rayons entraînent l'apparition de défauts optiques quand les rayons lumineux s'écartent de l'axe central de toute lentille. Ces défauts connus qui comprennent entre autres un défaut de courbure ou de puissance et un défaut d'astigmatisme peuvent être appelés de façon générique défauts d'oblicité des rayons.

L'homme de l'art sait compenser ces défauts. Par exemple, EP-A-0 990 939 propose un procédé de détermination par optimisation d'une lentille ophtalmique pour un porteur ayant une prescription d'astigmatisme. Ce document propose de choisir une lentille cible et d'utiliser une méthode de tracé de rayons et de minimiser la différence entre l'astigmatisme résiduel et l'astigmatisme de la lentille cible. L'astigmatisme résiduel est défini dans ce document comme l'écart en amplitude et en axe entre l'astigmatisme prescrit et l'astigmatisme généré par la lentille. Ce procédé permet une meilleure adaptation des lentilles aux porteurs astigmates, en évitant les aberrations optiques induites par l'ajout d'une surface torique. Le calcul s'effectue dans un repère lié à l'oeil, ce qui permet de tenir compte de l'effet de torsion de l'oeil lorsque le porteur regarde dans une direction excentrée. Dans les exemples de ce document, la prescription d'astigmatisme est unique, encore qu'il soit mentionné que la méthode est décrite sous l'hypothèse que l'astigmatisme prescrit en vision de loin est en fait l'astigmatisme à appliquer dans chaque direction du regard.

Toujours dans le but de compenser les défauts d'oblicité, US-A-5 270 746 (EP-A-0 461 624) décrit une lentille unifocale dans laquelle une des surfaces présente une première partie au-dessus du centre optique et une deuxième partie en dessous du centre optique. La variation de courbure dans la seconde partie, depuis le centre optique vers la périphérie, est inférieure à la variation de courbure dans la première partie, depuis le centre optique vers la périphérie. L'objectif poursuivi est que l'astigmatisme soit corrigé dans la partie supérieure de la lentille, pour des objets observés situés à grande distance; en revanche, dans la partie inférieure de la lentille, l'astigmatisme est corrigé pour des objets situés à une distance faible.

DE-A-18 05 561 (US-A-3 722 986) décrit une lentille ophtalmique unifocale. Pour corriger l'aberration d'astigmatisme de la lentille, au moins une des surfaces n'est pas sphérique, mais présente une forme d'ellipsoïde ou peut être approximée par un ellipsoïde. La figure 12 de ce document montre une lentille unifocale présentant une surface asphérique, avec une correction d'astigmatisme optimisée dans la partie supérieure pour une vision de loin et optimisée dans la partie inférieure pour une vision de près.

Les défauts d'oblicité peuvent être aussi compensés pour les lentilles multifocales. Par exemple, WO-A-98 12590 décrit une méthode de détermination par optimisation d'un jeu de lentilles ophtalmiques multifocales. Ce document propose de définir le jeu de lentilles en considérant les caractéristiques optiques des lentilles et notamment la puissance porteur et l'astigmatisme oblique, dans les conditions du porté. La lentille est optimisée par tracé de rayons, à partir d'un ergorama associant à chaque direction du regard dans les conditions du porté un point objet visé.
Il est aussi connu du document EP 0 949 529 A2 l'utilisation de lentilles multifocales pour des applications de lentille de contact ou de lentille intraoculaire. Par ailleurs, EP 0 990 939 A1 décrit un exemple de méthode de détermination par optimisation d'une lentille ophtalmique avec prise en compte d'une prescription d'astigmatisme et réduction des aberrations.
Il existe toujours un besoin d'une lentille qui satisfasse mieux les porteurs astigmates, qu'ils soient ou non presbytes.
L'invention propose en conséquence un procédé tel que défini dans la revendication 1.
Dans un mode de réalisation, l'astigmatisme prescrit en vision de près est mesuré en vision binoculaire. On mesure avantageusement l'astigmatisme dans un repère lié à l'oeil. La cible peut aussi comprendre une puissance prescrite au porteur en vision de près et/ou en vision de loin. L'optimisation peut utiliser comme cible une progression continue de l'amplitude d'astigmatisme le long de la méridienne.
L'optimisation peut aussi utiliser comme cible une progression continue de l'axe d'astigmatisme le long de la méridienne.
L'invention propose aussi une lentille obtenue par un tel procédé.
D'autres avantages et caractéristiques de l'invention apparaîtront à la lecture de la description qui suit des modes de réalisation de l'invention, donnés à titre d'exemple et en référence aux dessins qui montrent:

figure 1, un schéma d'un système optique oeil-lentille, en vue de dessus;
figures 2 et 3, des schémas en perspective d'un système oeil-lentille;
figures 4 à 7, des cartes de sphère moyenne et de cylindre des faces d'une lentille selon un premier mode de réalisation de l'invention;
figures 8 à 10, des graphes de puissance, d'amplitude d'astigmatisme et d'axe d'astigmatisme le long de la méridienne de cette lentille;
figures 11 et 12, des cartes de sphère moyenne et de cylindre d'une face d'une lentille selon un deuxième mode de réalisation de l'invention;
- figures 13 à 15, des graphes de puissance, d'amplitude d'astigmatisme et d'axe d'astigmatisme le long de la méridienne de cette lentille.

De façon connue en soi, en tout point d'une surface asphérique, on définit une sphère moyenne D donnée par la formule:

$$D = \frac{n-1}{2}\left(\frac{1}{R_1} + \frac{1}{R_2}\right)$$

où $R_1$ et $R_2$ sont les rayons de courbure maximal et minimal exprimés en mètres, et n l'indice du matériau constituant la lentille.
On définit aussi un cylindre C, donné par la formule:

$$C = (n-1)\left|\frac{1}{R_1} - \frac{1}{R_2}\right|$$

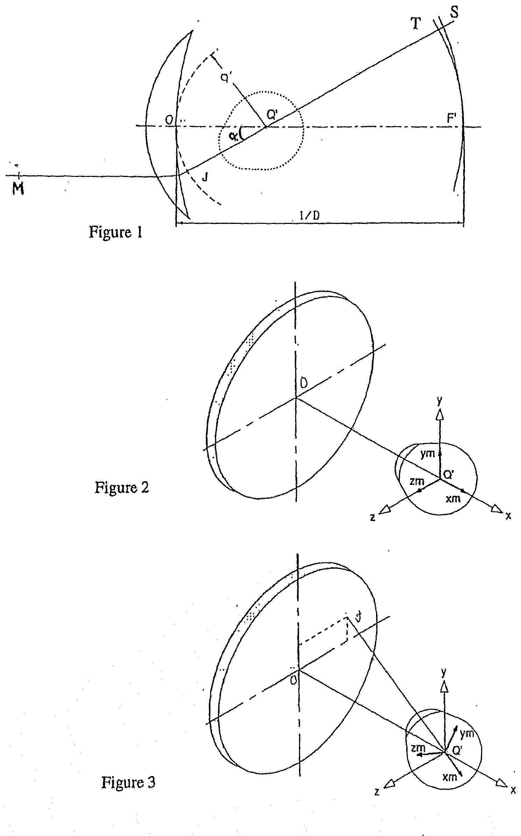

On définit pour une lentille donnée, les grandeurs optiques correspondantes, à savoir une puissance et un astigmatisme, dans les conditions du porté. La figure 1 montre un schéma d'un système optique oeil et lentille en vue de dessus, et montre les définitions utilisées dans la suite de la description. On appelle Q' le centre de rotation de l'oeil; l'axe Q'F' représenté sur la figure en traits mixtes est l'axe horizontal passant par le centre de rotation de l'oeil et s'étendant devant le porteur - autrement dit l'axe Q'F' correspond à la direction primaire du regard. Cet axe coupe, sur la face avant, un point de la lentille appelé Croix de Montage, qui est matérialisé sur les lentilles pour permettre leur positionnement par un opticien. La Croix de Montage est généralement situé 4 mm au-dessus du Centre Géométrique de la face avant. Soit le point O, point d'intersection de la face arrière et de cet axe Q'F'. On définit une sphère des sommets, de centre Q', et de rayon q', qui coupe la face arrière de la lentille au point O. A titre d'exemple, une valeur du rayon q' de 27 mm correspond à une valeur courante et fournit des résultats satisfaisants lors du porté des lentilles. On peut dessiner la coupe de la lentille dans le plan (O, x, y) défini en référence à la figure 2. La tangente à cette courbe au point O est inclinée par rapport à l'axe (O, y) d'un angle appelé angle pantoscopique. La valeur de l'angle pantoscopique est couramment de 12°. On peut également dessiner la coupe de la lentille dans le plan (O, x, z). La tangente à cette courbe au point O est inclinée par rapport à l'axe (O, z) d'un angle appelé galbe. La valeur du galbe est couramment de 0°.
On appelle dans la suite conditions du porté ces conditions de montage de la lentille par rapport à l'oeil, à savoir:

- une distance de 27 mm entre le centre de rotation de l'oeil et la face arrière de la lentille, sur l'axe Q'F';
- un angle pantoscopique de 12;

- un galbe de 0°.

Ces valeurs sont celles choisies pour les exemples décrits mais elles peuvent varier pour être égales à des valeurs propres à chaque individu.

Une direction donnée du regard - représentée en traits pleins sur la figure 1 - correspond à une position de l'oeil en rotation autour de Q' et à un point J de la sphère des sommets; une direction du regard peut aussi être repérée, en coordonnées sphériques, par deux angles $\alpha$ et $\beta$. L'angle $\alpha$ est l'angle formé entre l'axe Q'F' et la projection de la droite Q'J sur le plan horizontal contenant l'axe Q'F'; cet angle apparaît sur le schéma de la figure 1. L'angle $\beta$ est l'angle formé entre l'axe Q'F' et la projection et la projection de la droite Q'J sur le plan vertical contenant l'axe Q'F'. Une direction donnée du regard correspond donc à un point J de la sphère des sommets ou à un couple ($\alpha$, $\beta$).

Dans une direction donnée du regard, l'image d'un point M de l'espace objet situé à une distance objet donnée, se forme entre deux points S et T correspondant à des distances JS et JT minimale et maximale (qui seraient des distances focales sagittales et tangentielles dans le cas de surfaces de révolution, et d'un point M à l'infini). L'angle $\gamma$ repéré comme l'axe d'astigmatisme, est l'angle formé par l'image correspondant à la distance la plus petite avec l'axe ($z_m$), dans le plan ($z_m$, $y_m$). défini en référence aux figures 2 et 3. L'angle $\gamma$ est mesuré dans le sens trigonométrique direct lorsque l'on regarde le porteur. Dans l'exemple de la figure, sur l'axe Q'F', l'image d'un point de l'espace objet à l'infini se forme au point F'; les points S et T sont confondus, ce qui revient à dire que la lentille est localement sphérique dans la direction primaire du regard. La distance D est la frontale arrière de la lentille.

On appelle ergorama une fonction associant à chaque direction du regard la distance habituelle du point objet. Typiquement, en vision de loin suivant la direction primaire du regard, le point objet est à l'infini. En vision de près, suivant une direction correspondant sensiblement à un angle $\alpha$ de l'ordre de 5° et à un angle $\beta$ de l'ordre de 35°, la distance objet est de l'ordre de 30 à 50 cm. Pour plus de détails sur une définition possible d'un ergorama, on pourra consulter FR-A-2 753 805 (US-A-6 318 859). Ce document décrit un ergorama, sa définition et son procédé de modélisation. Un ergorama particulier consiste à ne prendre que des points à l'infini. Pour le procédé de l'invention, on peut considérer des points à l'infini ou non. L'ergorama peut aussi être fonction de l'amétropie du porteur.

A l'aide de ces éléments, on peut définir une puissance et un astigmatisme, dans chaque direction du regard. Pour une direction du regard ($\alpha$, $\beta$), on considère un point M objet à une distance objet donnée par l'ergorama. On détermine les points S et T entre lesquels se forme l'image de l'objet. La proximité image PI est alors donnée par

$$PI = \frac{1}{2}\left(\frac{1}{JT} + \frac{1}{JS}\right)$$

tandis que la proximité objet PO est l'inverse de la distance entre le point M et le point J de la sphère des sommets. La puissance est définie comme la somme des proximité objet et image, soit

$$P = PO + PI = \frac{1}{MJ} + \frac{1}{2}\left(\frac{1}{JT} + \frac{1}{JS}\right)$$

L'amplitude de l'astigmatisme est donnée par

$$A = \left|\frac{1}{JT} - \frac{1}{JS}\right|$$

L'angle de l'astigmatisme est l'angle $\gamma$ défini plus haut : il s'agit de l'angle mesuré dans un repère lié à l'oeil, par rapport à la direction $z_m$, avec lequel se forme l'image T, dans le plan ($z_m$, $y_m$). Ces définitions de puissance et d'astigmatisme sont des définitions optiques, dans les conditions du porté et dans un repère lié à l'oeil. Qualitativement, la puissance et l'astigmatisme ainsi définis correspondent aux caractéristiques d'une lentille mince, qui placée à la place de la lentille dans la direction du regard, fournirait localement les mêmes images. On remarque que la définition fournit, dans la direction primaire du regard, la valeur classique de l'astigmatisme.

La puissance et l'astigmatisme ainsi définis peuvent être mesurées expérimentalement sur la lentille en utilisant un frontofocomètre; elles peuvent aussi être calculées par tracé de rayons dans les conditions du porté.

Pour se rapprocher des conventions utilisées par les ophtalmologistes lors d'une prescription, on peut également définir la puissance maximale de la lentille comme :

$$P_{max} = \frac{1}{MJ} + \frac{1}{JT}$$

et la puissance minimale comme :

$$P_{min} = \frac{1}{MJ} + \frac{1}{JS}$$

Les ophtalmologistes donnent les prescriptions de puissance et d'astigmatisme soit en fournissant :

- la valeur minimale de la puissance $P_{min}$ et une valeur d'amplitude d'astigmatisme positive;
- la valeur maximale de la puissance $P_{max}$ et une valeur d'amplitude d'astigmatisme négative.

Il est clair que les valeurs de l'angle de l'astigmatisme dans la prescription varient en fonction de la convention de prescription utilisée. Dans chacune des deux conventions, on donne l'angle que fait l'image, S ou T, correspondant à la puissance indiquée, avec l'axe $z_m$ mesuré dans le sens trigonométrique direct lorsqu'on regarde le porteur. Dans la description de l'état de la technique donnée plus haut, la convention est celle utilisant la valeur maximale de la puissance et une valeur d'amplitude d'astigmatisme négative.

Les figures 2 et 3 montrent des schémas en perspective d'un système oeil-lentille. La figure 2 montre la position de l'oeil et du repère lié à l'oeil, dans la direction de regard principale, $\alpha = \beta = 0$, dite direction primaire du regard. Les points J et O sont alors confondus. La figure 3 montre la position de l'oeil et du repère qui y est lié dans une direction $(\alpha, \beta)$. On a représenté sur les figures 2 et 3 un repère {x, y, z} fixe et un repère $\{x_m, y_m, z_m\}$ lié à l'oeil, pour bien montrer la rotation de l'oeil. Le repère {x, y, z} a pour origine le point Q'; l'axe x est l'axe Q'F' - le point F' n'étant pas représenté sur les figures 2 et 3 et passe par le point O; cet axe est orienté de la lentille vers l'oeil, en correspondance avec le sens de mesure de l'axe d'astigmatisme. Le plan {y, z} est le plan vertical; l'axe y est vertical et orienté vers le haut; l'axe z est horizontal, le repère étant orthonormé direct. Le repère $\{x_m, y_m, z_m\}$ lié à l'oeil a comme centre le point Q'; l'axe $x_m$ est donné par la direction JQ' du regard, et coïncide avec le repère {x, y, z} pour la direction primaire du regard. La loi de Listing donne les relations entre les repères {x, y, z} et $\{x_m, y_m, z_m\}$ pour chaque direction du regard, voir Legrand, Optique Physiologique, tome 1, Edition de la Revue d'Optique, Paris 1965.

L'invention propose, pour déterminer les caractéristiques d'une lentille ophtalmique, de considérer la prescription d'astigmatisme du porteur, non seulement en vision de loin, mais aussi en vision de près. Elle repose sur la constatation que la rotation et la déformation des éléments constitutifs de l'oeil lorsque le porteur passe de la vision de loin à la vision de près provoquent des variations d'astigmatisme. Ces variations d'origine physiologique, liées à la déformation de l'oeil, peuvent selon l'invention être corrigées par la lentille placée devant l'oeil, en tenant compte des défauts d'oblicité et des variations de l'astigmatisme, spécifiques à la lentille considérée, provoquées par les conditions de visée, autrement dit par les variations de la distance objet entre la vision de loin et la vision de près. L'invention propose donc de déterminer la lentille ophtalmique à partir des prescriptions mesurées en vision de loin, mais aussi en vision de près dans les conditions du porté, notamment en vision binoculaire. Les caractéristiques de la lentille peuvent être déterminées par optimisation, comme décrit ci-dessous. L'invention s'applique dès lors que l'astigmatisme prescrit en vision de loin diffère de celui prescrit en vision de près, que ce soit par l'amplitude, par l'angle ou par l'amplitude et l'angle.

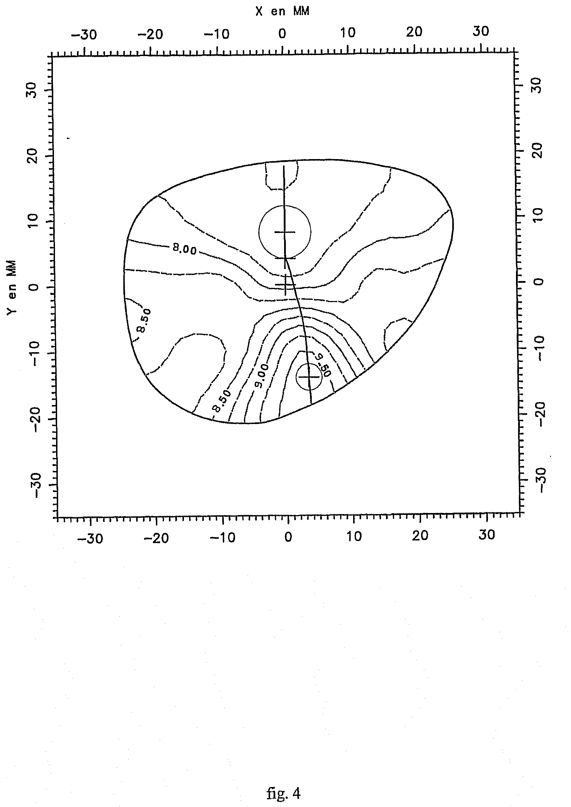

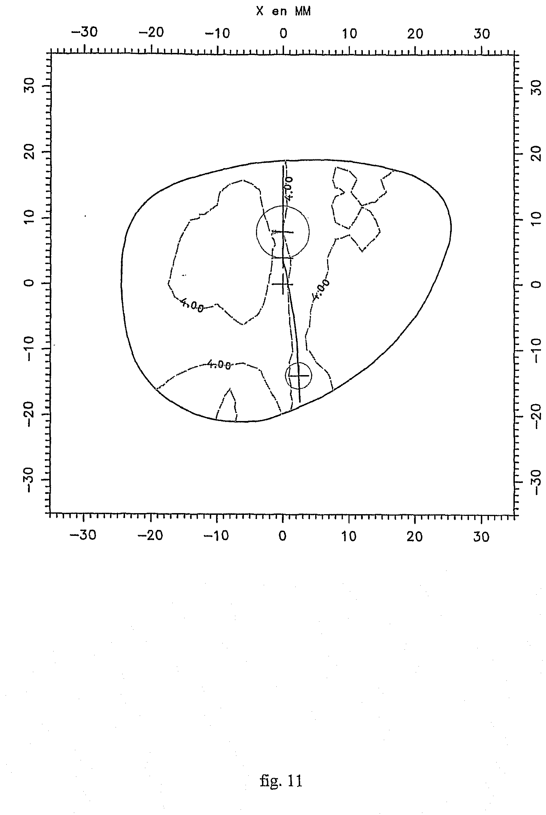

La solution s'applique non seulement à des lentilles progressives multifocales, comme dans l'exemple des figures 4 à 10 ci-dessous, mais aussi à des lentilles unifocales, comme dans l'exemple des figures 11 à 15 ci-dessous.

L'invention suppose de disposer d'une prescription porteur en vision de loin et en vision de près. En vision de loin, la prescription peut être mesurée sur le porteur, dans les conditions classiques de mesure de la prescription; on mesure la puissance et l'astigmatisme de l'oeil dans les conditions du porté, pour un objet à une distance infini, dans une direction du regard qui est la direction primaire du regard.

En vision de près, il est avantageux de mesurer la prescription pour une vision binoculaire du porteur. Cette mesure assure que l'oeil est bien dans une position correspondant à la position habituelle en vision de près. Une telle mesure assure que sont prises en compte:

- les variations d'astigmatisme découlant des variations de proximité du point objet;
- les variations d'astigmatisme découlant de la déformation de l'oeil lors de sa rotation et de l'accommodation.

La mesure peut être faite dans les conditions de lecture, dans une position qui correspond à la position habituelle de lecture du porteur, typiquement entre 30 et 50 cm.
Ces mesures fournissent, en vision de loin comme en vision de près, une valeur de puissance, une valeur d'astigmatisme et une valeur d'angle d'astigmatisme. Ces valeurs sont notées dans la suite $P_{minL}$, $A_L$ et $\gamma_L$ pour la vision de loin et $P_{minP}$, $A_P$ et $\gamma_P$ pour la vision de près. Ces valeurs sont données dans une convention de prescription donnant la valeur de puissance minimale et une amplitude d'astigmatisme positive. On pourrait faire le même calcul dans l'autre convention. Les prescriptions en vision de près et en vision de loin peuvent varier par une, deux ou trois valeurs du triplet. On peut calculer la puissance moyenne en VL notée $P_L$ et la puissance moyenne en VP notée $P_P$, de la manière suivante : $P_L=P_{minL}+A_L/2$, et $P_P=P_{minP}+A_P/2$. Une variation de puissance, c'est-à-dire une différence ($P_P$ - $P_L$) non nulle est représentative d'une progression de puissance, analogue à celle d'un verre progressif de l'état de la technique. On peut définir l'addition de puissance de la lentille comme étant égale à ($P_P$-$P_L$). Une variation de l'astigmatisme et/ou de sa direction, c'est-à-dire des différences ($A_P$ - $A_L$) et ($\gamma_P$ - $\gamma_L$) non toutes les deux nulles est représentative d'une variation d'astigmatisme entre la vision de loin et la vision de près, telle qu'utilisée dans la présente invention.

Connaissant les triplets ($P_{minL}$, $A_L$, $\gamma_L$) et ($P_{minP}$, $A_P$, $\gamma_P$), on détermine la lentille de sorte à ce qu'elle présente, dans les conditions du porté, les valeurs de puissance et d'astigmatisme requises, en vision de loin comme en vision de près. On peut procéder comme cela est connu en soi par optimisation pour définir la lentille. Des exemples de surfaces de départ sont données dans la suite; les cibles peuvent simplement être les prescriptions proposées, dans les directions de regard correspondant à la vision de loin et à la vision de près.

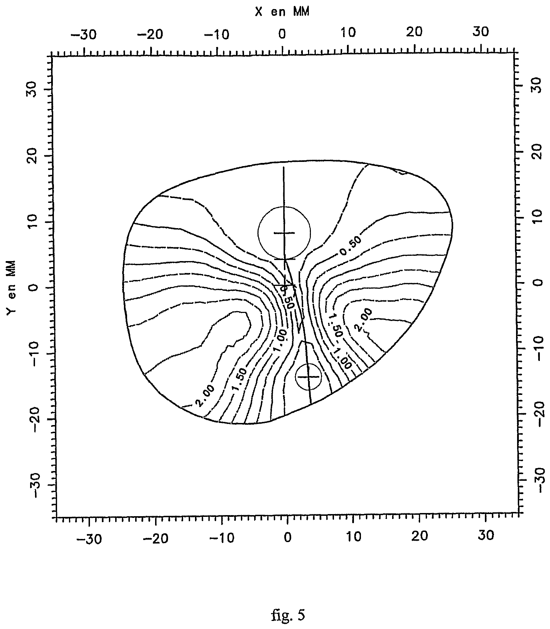

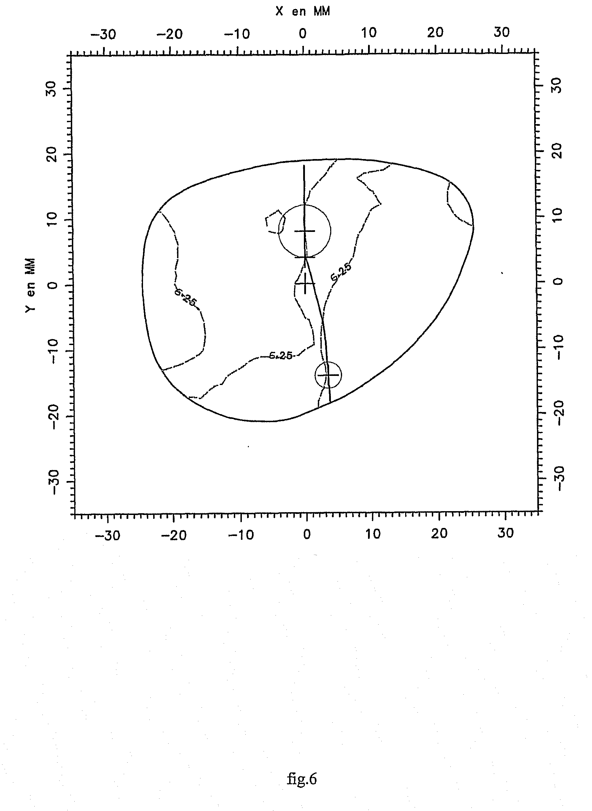

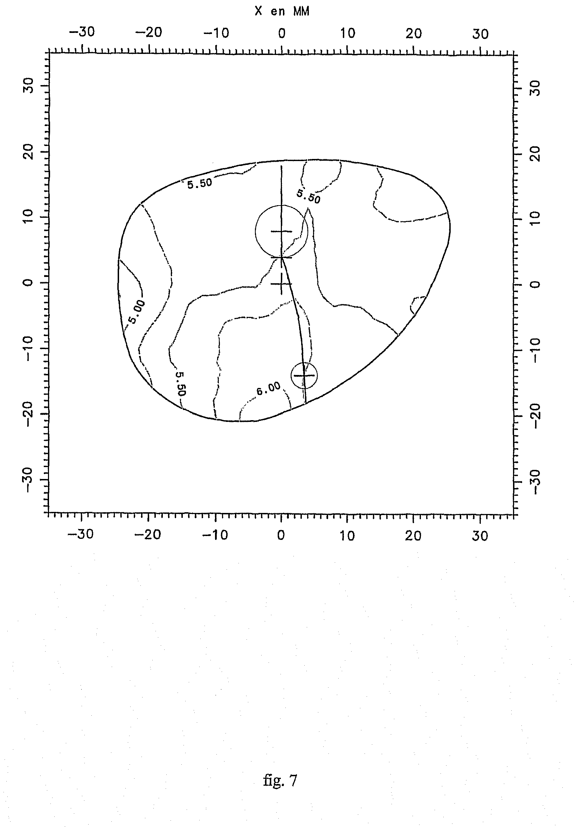

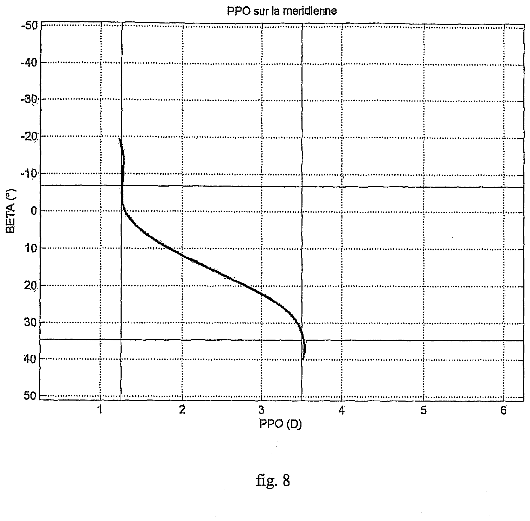

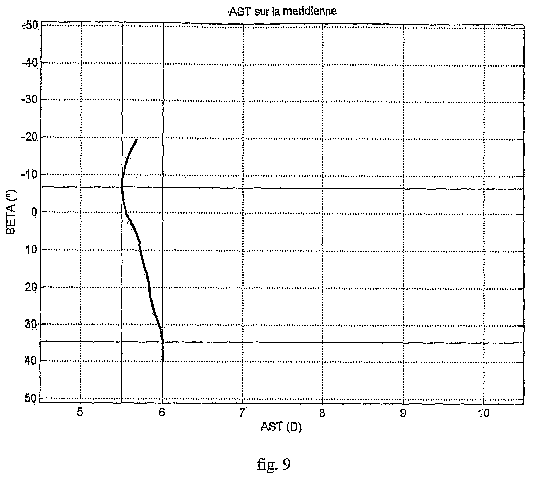

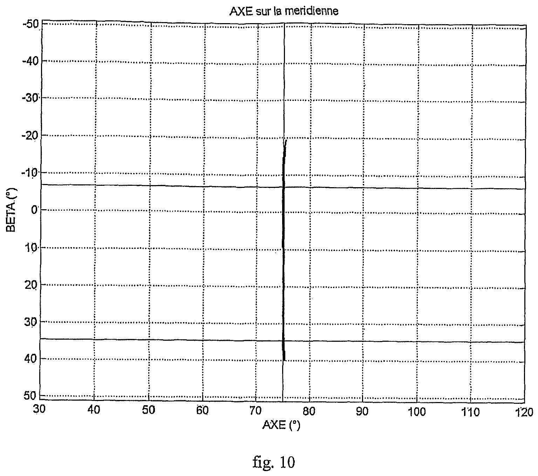

Les figures 4 à 10 montrent l'exemple d'une lentille selon l'invention, dans le cas de prescriptions présentant une addition de puissance entre la vision de loin et la vision de près. Dans cet exemple, on optimise la face arrière de la lentille et on utilise pour la face avant une face progressive multifocale connue en soi. La figure 4 est une représentation de la sphère moyenne de la face avant de la lentille. La figure 5 est une représentation du cylindre de la face avant de la lentille. Les figures 6 et 7 sont des représentations de la sphère moyenne du cylindre de la face arrière de la lentille; dans l'exemple, la face arrière de la lentille est obtenue par optimisation selon l'invention. La figure 8 est un graphe de la puissance le long de la méridienne, la figure 9 est un graphe de l'amplitude de l'astigmatisme le long de la méridienne et la figure 10 est un graphe de l'axe de l'astigmatisme le long de la méridienne.

Dans l'exemple de la figure, on considère une prescription en vision de loin ($P_{minL}$, $A_L$, $\gamma_L$) qui vaut (-1.50, 5.50, 75) et une prescription en vision de près ($P_{minP}$, $A_P$, $\gamma_P$) qui vaut (0.50, 6.00, 75). Ces valeurs sont données dans une convention de prescription donnant la valeur de puissance minimale et une amplitude d'astigmatisme positive. Ceci correspond à des puissances moyennes de $P_L$ = 1.25 dioptries en vision de loin et $P_P$ = 3.50 dioptries en vision de près. L'optimisation est effectuée sur la face arrière de la lentille. On utilise pour la face avant de la lentille, une surface multifocale progressive présentant l'addition de puissance $P_P$ - $P_L$ requise. Les figures 4 et 5 montrent les cartes de sphère et de cylindre de cette face avant; il peut s'agir typiquement de la surface des verres commercialisés par la demanderesse sous la marque PANAMIC; des surfaces de ce type et leurs propriétés sont décrites dans les demandes FR-A-2 769 998 (US-A-5 949 519), FR-A-2 769 999 (EP-A-0 911 672) ou encore FR-A-2 770 000 (EP-A-0 911 670).

Pour procéder à l'optimisation, on considère comme lentille de départ une lentille présentant cette surface avant. La surface arrière est déterminée de la façon suivante: on considère la lentille dans les conditions du porté, avec les valeurs de distance q' de 27 mm, d'angle pantoscopique de 12°, et de galbe de 0°, comme proposé plus haut. On choisit une épaisseur de lentille au centre, par exemple une épaisseur de 4 mm. On considère dans l'exemple un indice de verre n = 1,561. On considère une direction du regard définie par un point VL situé 8 mm au-dessus du centre géométrique de la lentille. Pour cette direction du regard, on détermine ensuite la face arrière torique nécessaire pour que la lentille, dans les conditions du porté, satisfasse à la prescription considérée; la face arrière peut être déterminée par tracé de rayons, en calculant les deux courbures de la face arrière dans la direction donnée du regard.

La direction du regard en vision de près peut être fixée pour un porteur moyen, compte tenu le cas échéant de l'écart pupillaire; on peut aussi utiliser comme direction du regard la direction du regard définie par le point de référence pour la vision de près sur la face avant de la lentille.

On comprend que cette lentille de départ présente, dans la zone de vision de près, une puissance proche de la puissance $P_P$. On comprend encore qu'il n'y a aucune raison que la lentille de départ présente, dans la zone de vision de près, une valeur de l'astigmatisme ou de l'angle proches des valeurs $A_P$ et $\gamma_P$ prescrites en vision de près.

On fixe ensuite des cibles pour l'optimisation. Au minimum, on peut utiliser comme cibles les valeurs des prescriptions, dans une direction de regard correspondant à la vision de loin et dans une direction du regard correspondant à la vision de près. La direction du regard correspondant à la vision de près est fixée comme indiqué aux paragraphes précédents.

On peut aussi utiliser d'autres valeurs de cibles pour l'optimisation. Il est possible de définir à cette fin une méridienne principale, qui correspond à un ensemble de directions du regard entre la direction de référence pour la vision de loin et la direction de référence pour la vision de près. Une première solution pour définir cette méridienne consiste à déterminer les directions du regard correspondant à des rayons passant par la méridienne principale de la face avant de la lentille. Une autre solution consiste à calculer la méridienne à partir de l'ergorama et de l'écart pupillaire.

Une fois la méridienne définie, on peut appliquer comme cibles de puissance optique le long de cette méridienne des valeurs des variations de puissances moyennes utilisées pour l'optimisation des faces progressives dans l'état de la technique.

Pour l'astigmatisme, on peut utiliser les cibles suivantes sur la méridienne: dans la partie de la méridienne s'étendant au dessus de la croix de montage, on utilise comme cibles les valeurs $A_L$ et $\gamma_L$ prescrites en vision de loin. Dans la partie de la méridienne s'étendant en dessous de la direction de référence pour la vision de près et 4 mm au dessus de cette direction de référence, on utilise comme cibles les valeurs $A_P$ et $\gamma_P$ prescrites en vision de près. Entre ces deux zones, on impose une variation continue de l'amplitude ou de l'angle de l'astigmatisme; cette variation est par exemple linéaire; on peut le cas échéant adapter la variation de l'amplitude et/ou de l'angle pour éviter les ruptures de pente.

On peut aussi prévoir des valeurs cibles en dehors de la méridienne. Pour la puissance, on peut utiliser, en tout point, des cibles de puissance correspondant à la répartition de puissance souhaitée, selon l'état de la technique utilisé pour les lentilles progressives. En d'autres termes, on peut utiliser en dehors de la méridienne les valeurs de cibles de puissances utilisées dans l'état de la technique pour l'optimisation de lentilles progressives. On peut aussi utiliser les valeurs de puissance obtenues en dehors de la méridienne pour une lentille progressive de l'état de la technique présentant l'addition de puissance souhaitée.

Pour les valeurs cibles de l'astigmatisme et de l'angle d'astigmatisme en dehors de la méridienne, on peut utiliser, dans un mode de réalisation de l'invention, des valeurs déterminées à partir d'une lentille progressive de l'état de la technique. On considère une lentille progressive de l'état de la technique, présentant l'addition de puissance souhaitée. On considère une direction $(\alpha, \beta)$ du regard, dans un repère lié à l'oeil et on obtient pour la lentille de l'état de la technique des valeurs $A'(\alpha, \beta)$ d'amplitude et $\gamma'(\alpha, \beta)$ d'angle d'astigmatisme. A la même hauteur $\beta$ du regard, la lentille de l'état de la technique présente sur la méridienne des valeurs $A_M'(\beta)$ d'amplitude et $\gamma_M'(\beta)$ d'angle d'astigmatisme. En notant $A_M(\beta)$ et $\gamma_M(\beta)$ les valeurs d'amplitude et d'angle d'astigmatisme sur la méridienne, définies comme indiqué plus haut, et utilisées comme cibles sur la méridienne, on peut utiliser comme cible:

$$A'(\alpha, \beta) + A_M(\alpha, \beta) - A_M'(\alpha, \beta)$$

pour l'amplitude d'astigmatisme et

$$\gamma'(\alpha, \beta) + \gamma_M(\beta) - \gamma_M'(\beta)$$

pour l'angle d'astigmatisme. En d'autres termes, les valeurs cibles en dehors de la méridienne sont déterminées à partir des valeurs d'une lentille de l'état de la technique dans la même direction du regard, corrigées pour tenir compte des valeurs cibles sur la méridienne à la même hauteur du regard, dans le repère de Listing lié à l'oeil.

Il est avantageux, mais pas indispensable, de prévoir des cibles plus nombreuses sur la méridienne et autour de celle-ci que dans la partie périphérique du verre.

Une fois les cibles définies, on détermine la lentille par optimisation. A cette fin, on considère une lentille courante; à l'initialisation, cette lentille courante est la lentille de départ. On fait varier les caractéristiques de la lentille courante pour s'approcher des valeurs cibles. Pour cette optimisation, on peut utiliser diverses représentations de la ou des surfaces qui varient. Dans l'exemple, on ne fait varier que la face arrière de la lentille, mais on pourrait aussi faire varier la face avant. La ou les faces qui varient peuvent être représentées par des polynômes de Zernike; on peut utiliser une nappe asphérique, superposée à l'une ou l'autre des faces, et faire varier cette nappe asphérique.

L'optimisation peut utiliser les techniques connues en soi. En particulier, on pourra utiliser la méthode d'optimisation par moindres carrés amortis (DLS).

Les figures 6 et 7 montrent des cartes de sphère et de cylindre de la face arrière de la lentille, qui est obtenue par optimisation selon l'invention. La figure 6 montre que la sphère moyenne le long de la méridienne est sensiblement constante sur la face arrière; ceci n'est pas étonnant dans la mesure où, en première approximation, l'incrément de puissance est obtenu par l'augmentation de sphère moyenne sur la face avant. La figure 7 montre en revanche que l'amplitude du cylindre varie depuis la zone de vision de loin vers la zone de vision de près; de nouveau, ceci n'est pas surprenant, dans la mesure où le cylindre sur la face avant est sensiblement nul le long de la méridienne. On n'a pas représenté sur les figures les variations de l'axe de du cylindre.

La figure 8 est un graphe de la puissance optique le long de la méridienne; on a porté en ordonnées l'angle $\beta$ et en abscisses la puissance. On reconnaît sur la figure une puissance sensiblement constante en vision de loin, autour de la valeur $P_L$, une puissance sensiblement constante en vision de près, autour de la valeur $P_P$ et une progression régulière de la puissance le long de la méridienne.

La figure 9 est un graphe de l'amplitude de l'astigmatisme le long de la méridienne; on a porté en ordonnées l'angle $\beta$ et en abscisses l'amplitude de l'astigmatisme. On reconnaît sur la figure une amplitude sensiblement constante autour du point VL, autour de la valeur $A_L$, une amplitude sensiblement constante en vision de près, autour de la valeur

$A_P$ et une progression régulière de l'amplitude le long de la méridienne, représentative des cibles discutées plus haut.

La figure 10 est un graphe de l'axe de l'astigmatisme le long de la méridienne; on a porté en ordonnées l'angle $\beta$ et en abscisses l'axe de l'astigmatisme. La figure montre que l'axe reste sensiblement constant, suivant les cibles.

Dans l'exemple des figures 4 à 10, le choix de la face avant conduit à répartir la progression de puissance sur la face avant, sous forme d'une progression de sphère moyenne, et la progression d'astigmatisme sur la face arrière, sous la forme d'une progression de cylindre. Cette solution est avantageuse dans la mesure où elle permet de capitaliser les efforts de l'état de la technique pour les lentilles multifocales progressives. On pourrait toutefois mélanger les deux progressions, ou choisir une répartition différentes.

Les figures 11 à 15 montrent un autre exemple dans un cas où la prescription en vision de loin ($P_{minL}$, $A_L$, $\gamma_L$) vaut (-0.50, 1.00, 90) et la prescription en vision de près ($P_{minP}$, $A_P$, $\gamma_P$) vaut (-0.75, 1.5, 95), toujours dans la même convention de prescription. Ces prescriptions correspondent aux puissances moyennes $P_L = P_P = 0$. Les valeurs $P_L$ et $P_P$ sont identiques, mais les valeurs d'amplitude et d'axe de l'astigmatisme varient entre la vision de loin et la vision de près. On utilise pour la lentille de départ une lentille unifocale présentant les valeurs de prescription en vision de loin, avec une épaisseur au centre optimisée. Les valeurs de distance q', d'angle pantoscopique, de galbe et d'indice du verre sont identiques à celles de l'exemple précédent. La face avant présente les caractéristiques suivantes:

Rayon de courbure R1 = R2 = 140 mm.

tandis que la face arrière de départ de l'optimisation est une surface torique et présente les caractéristiques suivantes:

$R_1$ = 124.71 mm ; $R_2$ = 157.90 mm ; Axe = 90°.

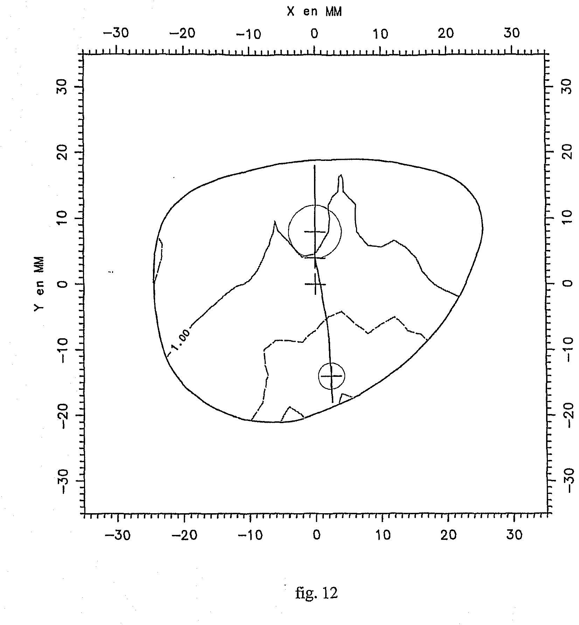

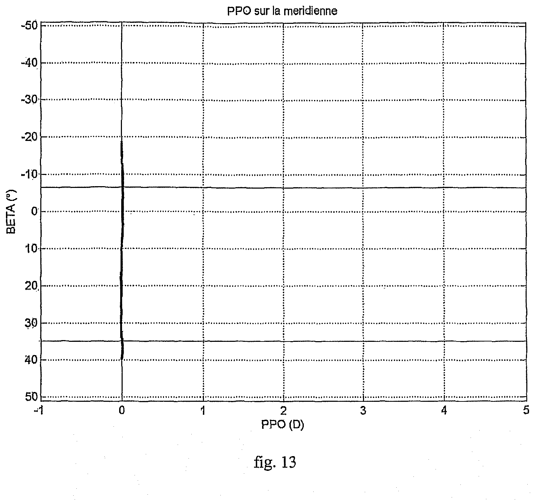

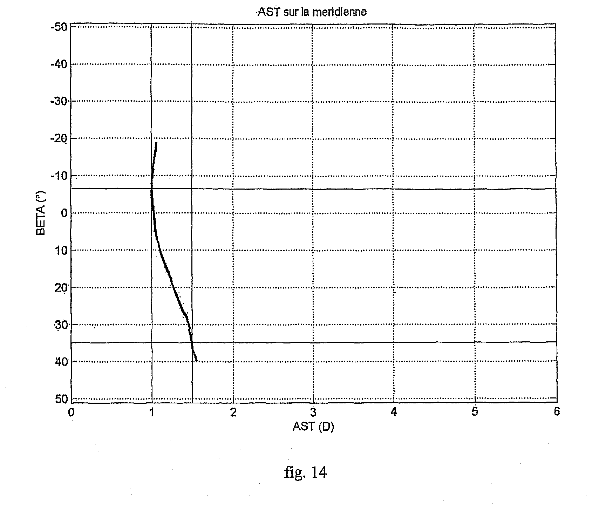

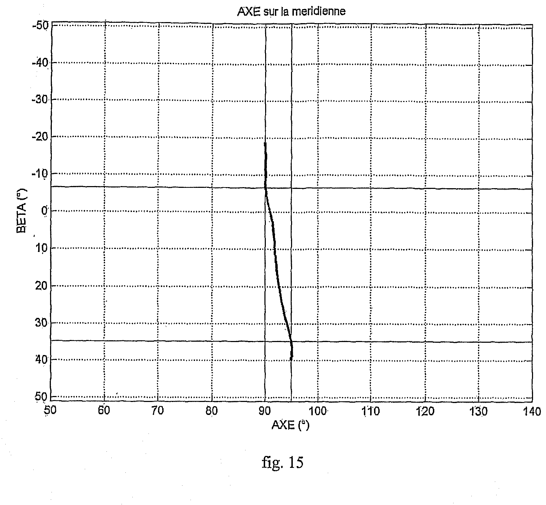

Pour l'optimisation, on fait varier uniquement la face arrière. Les cibles sont choisies comme expliqué plus haut. L'optimisation conduit aux résultats représentés sur les figures. On n'a pas représenté les cartes de sphère moyenne et de cylindre de la face avant; cette surface étant sphérique, la sphère moyenne est constante et le cylindre est constant et nul sur toute la surface. La figure 11, qui représente la sphère moyenne, montre que la sphère moyenne reste sensiblement constante sur la face arrière. La figure 12, qui représente le cylindre de la face arrière, montre que le cylindre augmente, sensiblement en proportion de l'augmentation de l'amplitude de la prescription d'astigmatisme entre la vision de loin et la vision de près. Les figures 13, 14 et 15 sont similaires aux figures 8, 9 et 10. La figure 13 montre que la puissance optique reste sensiblement constante sur la méridienne. La figure 14 montre le caractère progressif de l'augmentation d'amplitude entre la vision de loin et la vision de près. La figure 15 montre que l'angle d'astigmatisme varie régulièrement.

L'invention permet, pour des lentilles multifocales ou unifocales, d'améliorer les performances des lentilles pour des porteurs présentant un astigmatisme en VP différent de celui en VL. La prise en compte d'une mesure en vision de près permet de corriger l'astigmatisme, même pour des porteurs ne présentant pas d'astigmatisme en vision de loin.

Comme le montrent les figures, les lentilles des exemples se distinguent des lentilles de l'état de la technique, par la progression régulière de l'astigmatisme, en amplitude et/ou en axe, le long de la méridienne.

Bien entendu, l'invention n'est pas limitée aux exemples préférés donnés ci-dessus. On pourrait ainsi mesurer la prescription en vision de près dans une configuration monoculaire; cette solution présente le risque que la position de l'oeil du porteur ne corresponde pas exactement à la position naturelle de l'oeil du porteur en vision de près. On a proposé plus haut des définitions optiques de la puissance et de l'astigmatisme pour chaque direction du regard; ces définitions sont particulièrement adaptées au calcul de puissance et d'astigmatisme à l'aide d'un programme de tracé de rayon. On pourrait utiliser d'autres définitions dans les conditions du porté, comme la définition de l'astigmatisme proposée dans B. Bourdoncle et autres, Ray tracing through progressive ophthalmic lenses, 1990 International Lens Design Conference, D.T. Moore ed., Proc. Soc. Photo. Opt. Instrum. Eng.

Dans les exemples d'optimisation ci-dessus, on a proposé d'optimiser une seule des faces des lentilles. Il est clair que dans tous ces exemples, on peut échanger facilement le rôle des surfaces avant et arrière. On peut aussi répartir indifféremment la progression de sphère, d'amplitude ou d'axe de cylindre sur l'une ou l'autre des deux surfaces de la lentille, ou partiellement sur une face et l'autre, du moment que les cibles optiques décrites plus haut, en terme de puissance, axe et valeur d'astigmatisme sont bien les cibles de l'optimisation qui sert à obtenir le verre.

Il est aussi possible d'utiliser d'autres méthodes d'optimisation, et d'autres représentations des surfaces que celles proposées. On peut appliquer d'autres cibles pour l'optimisation, en prévoyant par exemple des largeurs de couloir en zone de vision intermédiaire, ou encore des plages angulaires pour les zones de vision de loin et de vision de près.

On peut utiliser d'autres valeurs pour les conditions du porté que celle proposées dans les exemples; il en est de même pour l'indice de la lentille. On peut utiliser pour les calculs la puissance minimale ou maximale ou la puissance définie plus haut.

## Revendications

**1.** Procédé de détermination d'une lentille ophtalmique pour un porteur auquel un astigmatisme a été prescrit en vision de près et en vision de loin, le procédé comprenant les étapes de:

- choix d'une lentille de départ et définition d'une lentille courante égale à la lentille de départ;
- optimisation, dans les conditions du porté, de la lentille courante ;

**caractérisé en ce que** la lentille ophtalmique comprend une face avant et une face arrière, où la face avant comprend un point appelé Croix de Montage, qui est matérialisé sur la lentille pour permettre son positionnement par un opticien, **en ce qu'**on utilise comme cible pour l'optimisation l'astigmatisme prescrit au porteur en vision de loin et l'astigmatisme prescrit au porteur en vision de près, sachant que l'astigmatisme est différent en vision de près et en vision de loin,
et **en ce que** l'optimisation comprend la définition d'une méridienne principale correspondant à un ensemble de directions du regard entre la direction de référence pour la vision de loin et la direction de référence pour la vision de près et utilise comme cible une variation sous la forme d'une progression continue et régulière de l'amplitude et/ou de l'axe d'astigmatisme le long de la méridienne principale.

**2.** Le procédé de la revendication 1, dans lequel l'astigmatisme prescrit en vision de près est mesuré en vision binoculaire.

**3.** Le procédé de la revendication 1 ou 2, dans lequel l'astigmatisme est mesuré dans un repère lié à l'oeil.

**4.** Le procédé de la revendication 1, 2 ou 3, dans lequel la cible comprend aussi une puissance prescrite au porteur en vision de près.

**5.** Le procédé de l'une des revendications 1 à 4, dans lequel la cible comprend aussi une puissance prescrite au porteur en vision de loin.

**6.** Le procédé de l'une des revendications 1 à 5, dans lequel la lentille de départ présentant des valeurs $A'(\alpha, \beta)$ d'amplitude et $\gamma'(\alpha, \beta)$ d'angle d'astigmatisme pour chaque direction de regard $(\alpha, \beta)$ et dans lequel des cibles pour l'amplitude d'astigmatisme $A(\alpha, \beta)$ sont définies, pour chaque direction de regard $(\alpha, \beta)$, comme suit :

$$A(\alpha, \beta) = A'(\alpha, \beta) + A_M(\alpha, \beta) - A_M'(\alpha, \beta),$$

avec $A_M(\alpha, \beta)$ la valeur cible d'amplitude d'astigmatisme sur la méridienne principale pour la direction de regard donnée et avec $A_M'(\alpha, \beta)$ la valeur d'amplitude d'astigmatisme sur la méridienne principale de la lentille de départ pour la direction de regard donnée.

**7.** Le procédé de l'une des revendications 1 à 6, dans lequel des cibles pour l'axe d'astigmatisme $\gamma(\alpha, \beta)$ sont définies, pour chaque direction de regard $(\alpha, \beta)$, comme suit :

$$\gamma(\alpha, \beta) = \gamma'(\alpha, \beta) + \gamma_M(\alpha, \beta) - \gamma_M'(\alpha, \beta),$$

avec $\gamma_M(\alpha, \beta)$ la valeur cible d'axe d'astigmatisme sur la méridienne principale pour la direction de regard donnée et avec $\gamma_M'(\alpha, \beta)$ la valeur d'axe d'astigmatisme sur la méridienne principale de la lentille de départ pour la direction de regard donnée.

## Patentansprüche

**1.** Verfahren zur Bestimmung einer ophthalmischen Linse für einen Träger, bei dem ein Astigmatismus in der Nahsicht und der Fernsicht verschrieben wurde, wobei das Verfahren die folgenden Schritte enthält:

- Wahl einer Ausgangslinse und Definition einer üblichen Linse gleich der Ausgangslinse;

- Optimierung, unter den Tragebedingungen, der üblichen Linse;

**dadurch gekennzeichnet, dass** die ophthalmische Linse eine Vorderseite und eine Rückseite enthält, wobei die Vorderseite einen Montagekreuz genannten Punkt enthält, der auf der Linse realisiert wird, um seine Positionierung durch einen Optiker zu ermöglichen, dass als Ziel für die Optimierung der für den Träger in Fernsicht verschriebene Astigmatismus und der für den Träger in Nahsicht verschriebene Astigmatismus verwendet werden, da der Astigmatismus in Nahsicht und in Fernsicht unterschiedlich ist,
und dass die Optimierung die Definition eines Hauptmeridians enthält, der einer Einheit von Richtungen des Blicks zwischen der Bezugsrichtung für die Fernsicht und der Bezugsrichtung für die Nahsicht entspricht, und als Ziel eine Veränderung in Form einer kontinuierlichen und regelmäßigen Progression der Amplitude und/oder der Astigmatismusachse entlang des Hauptmeridians verwendet.

2. Verfahren nach Anspruch 1, wobei der verschriebene Astigmatismus in Nahsicht beim Binokularsehen gemessen wird.

3. Verfahren nach Anspruch 1 oder 2, wobei der Astigmatismus in einem mit dem Auge verbundenen Bezugssystem gemessen wird.

4. Verfahren nach Anspruch 1, 2 oder 3, wobei das Ziel auch eine für den Träger in Nahsicht verschriebene Stärke enthält.

5. Verfahren nach einem der Ansprüche 1 bis 4, wobei das Ziel auch eine für den Träger in Fernsicht verschriebene Stärke enthält.

6. Verfahren nach einem der Ansprüche 1 bis 5, wobei die Ausgangslinse Amplituden- $A'(\alpha, \beta)$ und Astigmatismuswinkelwerte $\gamma'(\alpha, \beta)$ für jede Blickrichtung $(\alpha, \beta)$ aufweist, und wobei Ziele für die Astigmatismusamplitude $A(\alpha, \beta)$ für jede Blickrichtung $(\alpha, \beta)$ folgendermaßen definiert werden:

$$A(\alpha, \beta) = A'(\alpha, \beta) + A_M(\alpha, \beta) - A_M'(\alpha, \beta),$$

mit $A_M(\alpha, \beta)$ dem Astigmatismusamplitude-Zielwert auf dem Hauptmeridian für die gegebene Blickrichtung und mit $A_M'(\alpha, \beta)$ dem Astigmatismusamplitudenwert auf dem Hauptmeridian der Ausgangslinse für die gegebene Blickrichtung.

7. Verfahren nach einem der Ansprüche 1 bis 6, wobei Ziele für die Astigmatismusachse $\gamma(\alpha, \beta)$ für jede Blickrichtung $(\alpha, \beta)$ folgendermaßen definiert werden:

$\gamma(\alpha, \beta) = \gamma'(\alpha, \beta) + \gamma_M(\alpha, \beta) - \gamma_M'(\alpha, \beta)$, mit $\gamma_M(\alpha, \beta)$ dem Astigmatismusachse-Zielwert auf dem Hauptmeridian für die gegebene Blickrichtung und mit $\gamma_M'(\alpha, \beta)$ dem Astigmatismusachsenwert auf dem Hauptmeridian der Ausgangslinse für die gegebene Blickrichtung.

## Claims

1. Method for determining an ophthalmic lens for a wearer to whom an astigmatism has been prescribed in near vision and in far vision, the method comprising the steps of:

- choosing a starting lens and defining a current lens equal to the starting lens; and
- optimising, under the conditions of wear, the current lens;

**characterised in that** the ophthalmic lens comprises a front face and a back face, the front face comprising what is called a fitting cross, which is marked on the lens in order to allow it to be positioned by an optician,
**in that**, knowing that the astigmatism is different in near vision and in far vision, the astigmatism prescribed to the wearer in far vision and the astigmatism prescribed to the wearer in near vision are used as target for the optimisation, and **in that** the optimisation comprises defining a principal meridian corresponding to a set of directions of the gaze between the reference direction for far vision and the reference direction for near vision and uses as target a variation in the form of a continuous and regular progression of the astigmatism axis and/or amplitude along the principal meridian.

2. Method according to Claim 1, wherein the astigmatism prescribed in near vision is measured in binocular vision.

3. Method according to Claim 1 or 2, wherein the astigmatism is measured in a coordinate system associated with the eye.

4. Method according to Claim 1, 2 or 3, wherein the target also comprises a power prescribed to the wearer in near vision.

5. Method according to one of Claims 1 to 4, wherein the target also comprises a power prescribed to the wearer in far vision.

6. Method according to one of Claims 1 to 5, wherein the starting lens having values A'(α, β) of amplitude and γ'(α, β) of angle of astigmatism for each gaze direction (α, β) and wherein the targets for the astigmatism amplitude A(α, β) are defined, for each gaze direction (α, β), as follows:

$$A(\alpha, \beta) = A'(\alpha, \beta) + A_M(\alpha, \beta) - A_M'(\alpha, \beta),$$

where $A_M(\alpha, \beta)$ is the target value of astigmatism amplitude on the principal meridian for the given gaze direction and where $A_M'(\alpha, \beta)$ is the value of astigmatism amplitude on the principal meridian of the starting lens for the given gaze direction.

7. Method according to one of Claims 1 to 6, wherein targets for the astigmatism axis γ(α, β) are defined, for each gaze direction (α, β), as follows:

$$\gamma(\alpha, \beta) = \gamma'(\alpha, \beta) + \gamma_M(\alpha, \beta) - \gamma_M'(\alpha, \beta),$$

where $\gamma_M(\alpha, \beta)$ is the target value of astigmatism axis on the principal meridian for the given gaze direction and where $\gamma_M'(\alpha, \beta)$ is the value of astigmatism axis on the principal meridian of the starting lens for the given gaze direction.

T
S
q'
O
Q'
F'
α
J
M
l/D
O
y
ym
Q'
zm
xm
z
x
O
y
ym
zm
Q'
xm
z
x

Figure 1

Figure 2

Figure 3

X en MM
Y en MM
8.00
8.50
8.50
9.00
9.50

fig. 4

X en MM
Y en MM
-30
-20
-10
0
10
20
30
0.50
1.00
1.50
2.00

fig. 5

X en MM
Y en MM
-30
-20
-10
0
10
20
30
5.25
5.25
5.25
5.25

fig.6

X en MM
-30
-20
-10
0
10
20
30
5.50
5.50
5.00
5.50
6.00

fig. 7

PPO sur la meridienne
-50
-40
-30
-20
-10
0
10
20
30
40
50
BETA (°)
1
2
3
4
5
6
PPO (D)

fig. 8

AST sur la meridienne
-50
-40
-30
-20
-10
0
10
20
30
40
50
BETA (°)
5
6
7
8
9
10
AST (D)

fig. 9

AXE sur la meridienne
-50
-40
-30
-20
-10
0
10
20
30
40
50
BETA (°)
30
40
50
60
70
80
90
100
110
120
AXE (°)

fig. 10

X en MM
-30
-20
-10
0
10
20
30
4.00
4.00
4.00
4.00

fig. 11

X en MM
Y en MM
-30
-20
-10
0
10
20
30
-1.00

fig. 12

PPO sur la meridienne
-50
-40
-30
-20
-10
0
10
20
30
40
50
BETA (°)
-1
0
1
2
3
4
5
PPO (D)

fig. 13

AST sur la meridienne
-50
-40
-30
-20
-10
0
10
20
30
40
50
BETA (°)
0
1
2
3
4
5
6
AST (D)

fig. 14

AXE sur la meridienne
BETA (°)
-50
-40
-30
-20
-10
0
10
20
30
40
50
50
60
70
80
90
100
110
120
130
140
AXE (°)

fig. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2699294 A
- US 5270745 A
- US 5272495 A
- FR 2683642 A
- FR 2704327 A
- FR 2588973 A
- EP 0990939 A
- US 5270746 A
- EP 0461624 A
- DE 1805561 A
- US 3722986 A
- WO 9812590 A
- EP 0949529 A2
- EP 0990939 A1
- FR 2753805 A
- US 6318859 A
- FR 2769998 A
- US 5949519 A
- FR 2769999 A
- EP 0911672 A
- FR 2770000 A
- EP 0911670 A


### Littérature non-brevet citée dans la description


- **LEGRAND.** Optique Physiologique. 1965
- Ray tracing through progressive ophthalmic lenses. **B. BOURDONCLE.** International Lens Design Conference. Proc. Soc. Photo. Opt. Instrum. Eng, 1990